Europäisches Patentamt

European Patent Office

Office européen des brevets

(19)

(11) Veröffentlichungsnummer: **0 088 321**
**B1**

(12) **EUROPÄISCHE PATENTSCHRIFT**

(45) Veröffentlichungstag der Patentschrift:
13.05.87

(51) Int. Cl.⁴: **H 01 R 25/14**

(21) Anmeldenummer: 83101916.1

(22) Anmeldetag: 26.02.83

(54) Innenliegender Stossverbinder zur Kupplung von zwei in Längsrichtung aufeinanderfolgenden hohlprofilartigen Bauteilen.

(30) Priorität: 04.03.82 DE 3207711

(43) Veröffentlichungstag der Anmeldung:
14.09.83 Patentblatt 83/37

(45) Bekanntmachung des Hinweises auf die Patenterteilung:
13.05.87 Patentblatt 87/20

(84) Benannte Vertragsstaaten:
AT BE CH FR GB IT LI LU NL SE

(56) Entgegenhaltungen:
CH - A - 629 885
DE - A - 3 128 595
FR - A - 2 000 838
US - A - 3 529 274

(73) Patentinhaber: ERCO Leuchten GmbH, Brockhauser Ebene, D-5880 Lüdenscheid (DE)

(72) Erfinder: Schwarzfischer, Peter, Dipl.-Ing.,
Dahlienstrasse 8, D-5885 Schalksmühle (DE)
Erfinder: Scheller, Peter, General-Wille-Strasse 225,
CH-8706 Meilen (CH)
Erfinder: Schmitz, Jochen, Rütistrasse 8,
CH-8903 Birmensdorf (CH)

(74) Vertreter: Ostriga, Harald, Dipl.-Ing. et al, Patentanwälte Dipl.-Ing. Harald Ostriga Dipl.-Ing. Bernd Sonnet Stresemannstrasse 6-8, D-5600 Wuppertal 2 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen innenliegenden Stossverbinder zur Kupplung von zwei in Längsrichtung aufeinanderfolgenden hohlprofilartigen Bauteilen, insbesondere von Stromentnahmeschienen, längsgeschlitzten Kaschierrohren für Stromentnahmeschienen od.dgl., mit einem der Stossüberbrückung dienenden, sich quer zum Stoss und in Profillängsrichtung erstreckenden laschenartigen Bauteil, welches zwei Laschenbereiche bildet, von denen jeder mit einem der beiden profilseitigen Stossbereiche mindestens mittelbar schraubverbindbar ist.

Der durch offenkundige Vorbenutzung bekanntgewordene innenliegende Stossverbinder besteht aus einer Verbindungslasche mit je einem beiderseits des Stosses angeordneten Laschenbereich. Für jeden Laschenbereich ist mindestens eine sowohl diesen als auch das Hohlprofil durchsetzende Schraube vorgesehen. Der bekannte Stossverbinder wird als nachteilig empfunden, weil die Schraubverbindungen sichtbar und ausserdem besondere Vorbereitungsarbeiten, insbesondere das Herstellen von Bohrungen in den Hohlprofilen, erforderlich sind. Eine nachteilige Eigenart des bekannten Stossverbinders besteht auch darin, dass unschöne Stosslücken nur bei genauester Arbeitsweise vermeidbar sind.

Ausgehend von dem eingangs beschriebenen bekannten Stossverbinder dieser Gattung, besteht die der Erfindung zugrunde liegende Aufgabe darin, einen die nachteiligen Stosslücken vermeidenden, in einfacher Weise und unsichtbar zu montierenden Stossverbinder zu schaffen. Entsprechend der Erfindung wurde diese Aufgabe dadurch gelöst, dass mindestens ein Laschenbereich des laschenartigen Bauteils einen im wesentlichen starren Verdrängungskörper bildet, welcher innerhalb eines trogartigen Federkörpers, der zwei Spreizschenkel und einen diese miteinander verbindenden Steg aufweist, im Parallelabstand vom Federkörper-Steg an den Spreizschenkel-Innenflächen in Profillängsrichtung gleit- und begrenzt relativverschiebbar anliegt, wobei von einer dem anderen Laschenbereich abgewandten Stirnseite des Federkörper-Steges eine mit diesem einen stumpfen Winkel einschliessende Federzunge zum laschenartigen Bauteil hin vorragt, deren Zungenwurzel im Übergangsbereich zum Federkörper-Steg mittels einer Schraube an das laschenartige Bauteil annäherbar und deren Zungenspitze mit dem laschenartigen Bauteil bewegungsgekuppelt ist, und wobei die Spreizschenkel an ihren freien Enden mit an der Hohlprofil-Innenfläche abstützbaren Haltekrallen versehen sind.

Der erfindungsgemässe Stossverbinder arbeitet in vorteilhafter Weise wie folgt: Es sei zunächst davon ausgegangen, dass der Laschenbereich mit dem ihm zugeordneten trogartigen Federkörper endseitig in einem Hohlprofil angeordnet und der andere Laschenbereich des laschenartigen Bauteils im anderen benachbarten Hohlprofil-Ende in irgendeiner Weise – zumindest zugbelastbar – befestigt ist. Die Stirnflächen der benachbarten Profile werden sodann aneinandergeschoben und die Zungenwurzel der Federzunge im Übergangsbereich zum Federkörper-Steg mittels einer Schraube an das starre laschenartige Bauteil angenähert. Gleich zu Beginn der Schraubverspannung beissen sich die Haltekrallen der Spreizschenkel im Hohlprofil fest, während die zunächst schräg zum laschenartigen Bauteil verlaufende, von der Stossfuge weg weisende Federzunge sich streckt. Infolge der Bewegungskupplung zwischen der Spitze der Federzunge und dem laschenartigen Bauteil übt die sich streckende Federzunge einen von der Stossfuge weg gerichteten Schub auf das laschenartige Bauteil, an welchem zugleich das Nachbarprofil befestigt ist, aus. Mit der Schubbewegung entsteht ein dichtes Aneinanderfügen der hohlprofilseitigen Stirnflächen im Stossbereich.

Mit dem erfindungsgemässen Stossverbinder ist daher ohne Herstellung besonderer hohlprofilseitiger Bohrlöcher eine bequeme sichere Montage unter gleichzeitiger Vermeidung unschöner Stosslücken möglich.

In weiterer Ausgestaltung der Erfindung divergieren die Spreizschenkel unter einem spitzen Winkel, insbesondere von etwa 45°–70°, vorzugsweise unter einem Winkel von 60°.

Die begrenzte Relativverschieblichkeit zwischen Federkörper und laschenartigem Bauteil ist entsprechend weiteren Merkmalen der Erfindung dadurch besonders vorteilhaft gegeben, dass die Schraube den Übergangsbereich von der Zungenwurzel zum Federkörper-Steg in einem sich mit seinem längeren Durchmesser in Profillängsrichtung erstreckenden Langloch durchsetzt, den Übergangsbereich stegaussenseitig mit ihrem Schraubenkopf überlagert und mit ihrem freien Gewinde-Ende in einem Gewindeloch des laschenartigen Bauteils aufgenommen ist.

Die Bewegungskupplung zwischen der Zungenspitze und dem laschenartigen Bauteil ist erfindungsgemäss dadurch möglich, dass die Zungenspitze abgewinkelt und in einem im laschenartigen Bauteil vorgesehenen, quer zur Profillängsrichtung verlaufenden Kupplungsschlitz aufgenommen ist. Eine Begrenzung des Einschubs der Zungenspitze in den Kupplungsschlitz ist erfindungsgemäss dadurch gegeben, dass die Federzunge beiderseits im Abstand von der Zungenspitze sich benachbart ausserhalb des Kupplungsschlitzes auf dem laschenartigen Bauteil abstützende Anlageflächen bildet.

Eine eine Relativverschieblichkeit zwischen dem Federkörper und dem laschenartigen Bauteil ermöglichende Gleitverbindung ist in weiterer Ausgestaltung der Erfindung dadurch geschaffen worden, dass das laschenartige Bauteil etwa in Anpassung an die Querschnittsform des Federkörpers ebenfalls im wesentlichen trogartig ausgebildet ist und mit zwei zueinander divergierenden Gleitschenkeln an den Spreizschenkel-Innenflächen anliegt.

Eine besondere erfindungsgemässe Ausführungsform kennzeichnet sich durch eine bezüglich einer durch den Stoss verlaufenden Symmetrieebene spiegelsymmetrische Ausbildung. Diese Ausführungsform bildet beiderseits der Stossfuge je eine gesondert schraubverspannbare Federkörper/Verdrängerkörper-Anordnung. Die Federzungen beider Federkörper weisen hierbei mit ihren Zungenspitzen in einander entgegengesetzte Richtungen.

In den Zeichnungen ist die Erfindung anhand eines bevorzugten Ausführungsbeispiels näher dargestellt, es zeigen:

Fig. 1 eine Stossverbindung, bei welcher ein hohlprofilartiges Bauteil, und zwar eine Endkappe, mit der Stirnseite eines Kaschierrohres für Stromentnahmeschienen mittels eines innenliegenden Stossverbinders gekuppelt werden soll, wobei in dieser Darstellung noch eine Stosslücke besteht, während gemäss

Fig. 2 der innenliegende Stossverbinder bereits verspannt und die Stosslücke geschlossen ist,

Fig. 3 einen Längsschnitt lediglich durch den unverspannten Stossverbinder, etwa entsprechend der Schnittlinie III–III in Fig. 1,

Fig. 4 einen Längsschnitt lediglich durch den verspannten Stossverbinder, etwa entsprechend der Schnittlinie IV–IV in Fig. 2 und

Fig. 5 einen Querschnitt durch den unverspannten Stossverbinder, etwa entsprechend der Schnittlinie V–V in Fig. 3.

In den Zeichnungen ist ein Stossverbinder zur Kupplung eines Kaschierrohres 11 aus Leichtmetall und einer Endkappe 12 aus Kunststoff insgesamt mit der Bezugsziffer 10 bezeichnet.

Das an einer Längsseite offene Kaschierrohr 11 dient der Aufnahme einer nicht gezeigten Stromentnahmeschiene, von Einzelleuchten od. dgl.

Der Stossverbinder 10 ist in einem eine hinterschnittene Nut bildenden Längskanal 13 aufgenommen, welcher etwa im Scheitelbereich des Kaschierrohres 11 vorgesehen und von sich im wesentlichen radial erstreckenden Rippen 14 an beiden Längsseiten begrenzt ist. Im Eckbereich zwischen den inneren Rippenwandflächen 15 und der Bodenfläche 16 des Längskanals 13 sitzen Haltekrallen 17 von Spreizschenkeln 18 eines insgesamt mit 19 bezeichneten Federkörpers auf. Die beiden Spreizschenkel 18 des Federkörpers 19 sind über einen Steg 20 stoffschlüssig miteinander verbunden und divergieren unter einem spitzen Winkel $\alpha$ von – wie vorliegend – etwa 65°. (s. Fig. 5).

Aus dem Zusammenhang der Zeichnungen ist ersichtlich, dass der Federkörper 19 mit seinen beiden über den Steg 20 verbundenen Spreizschenkeln 18 einen etwa trogförmigen Körper bildet, dessen Längsachse im wesentlichen parallel der Profillängsrichtung x ist. Die zwischen den Bauteilen 11 und 12 gebildete Stossfuge hingegen erstreckt sich in einer Ebene, in welcher eine Gerade y liegt.

Innen in dem aus Federstahl oder aus einem ähnlichen Werkstoff bestehenden trogartigen Federkörper 19 ist ein laschenartiges Bauteil 21 mit einem Laschenbereich A und mit einem Laschenbereich B angeordnet. Das laschenartige Bauteil 21 besteht aus einem verhältnismässig dickwandigen Werkstoff (insbesondere aus Stahl od. dgl.) und bildet daher einen Verdrängungskörper, welcher in Anpassung an die Querschnittsform des Federkörpers 19 ebenfalls im wesentlichen trogartig ausgebildet ist und mit zwei zueinander divergierenden Gleitschenkeln 22 an den Innenflächen 23 der Spreizschenkel 18 anliegt. Die Gleitschenkel 22 des laschenartigen Bauteils 21 sind ebenfalls durch einen Steg 24 stoffschlüssig miteinander verbunden. Der Steg 24 erstreckt sich im Parallelabstand zum Steg 20 des Federkörpers 19.

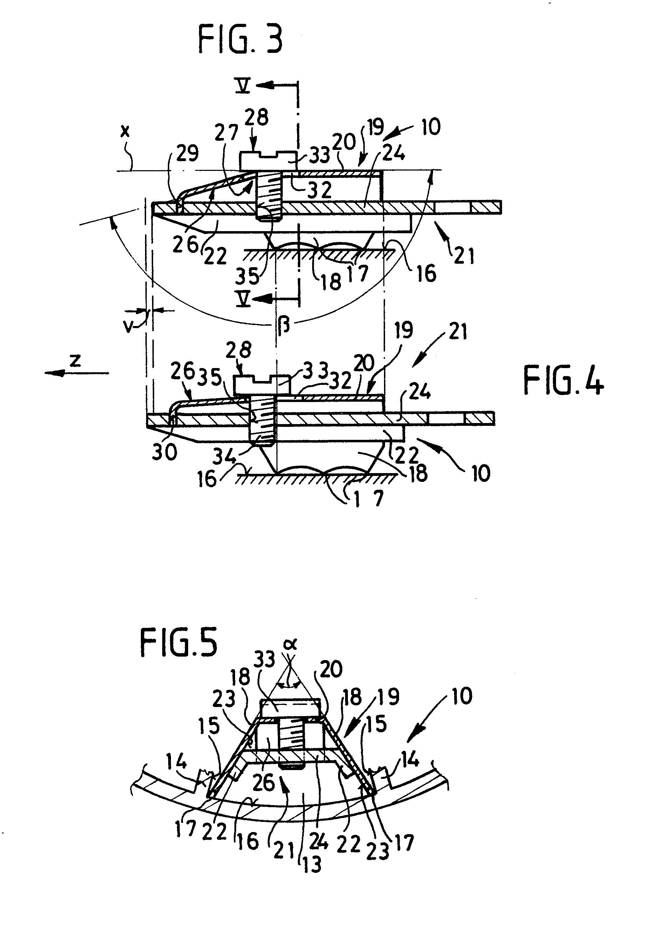

Wie insbesondere aus Fig. 3 in Verbindung mit den übrigen Figuren zu ersehen, ist an der dem Laschenbereich B abgewandten Stirnseite 25 des Federkörper-Stegs 20 eine Federzunge 26 vorgesehen, die von der Stossfuge (bei y) weg zeigt und mit dem Steg 20 einen stumpfen Winkel $\beta$ einschliesst. Die Zungenwurzel 27 ist hierbei im Übergangsbereich zum Federkörper-Steg 20 mittels einer Schraube 28 an das laschenartige Bauteil 21 annäherbar. Die Zungenspitze 29 bildet eine Abwinklung, welche in einem im Steg 24 des laschenartigen Bauteils 21 vorgesehenen, quer zur Profillängsrichtung x verlaufenden Kupplungsschlitzes 30 aufgenommen ist. Beiderseits im Abstand von der Zungenspitze 29 bildet die Federzunge 26 benachbart ausserhalb des Kupplungsschlitzes 30 sich auch dem Steg 24 des laschenartigen Bauteils 21 abstützende Anlageflächen 31. Die Anlageflächen 31 stellen eine Einschubbegrenzung dar, welche ein Hindurchrutschen der Zungenspitze durch den Kupplungsschlitz 30 verhindert. Zungenspitze 29 und Kupplungsschlitz 30 bilden daher gemeinsam mit den Anlageflächen 31 eine Bewegungskupplung, die in der Lage ist, einen von der Zungenspitze 29 ausgeübten Schub weg von der Stossfuge (bei y) auf das laschenartige Bauteil 21 auszuüben.

Die Schraube 28 durchsetzt den Übergangsbereich von der Zungenwurzel 27 zum Federkörper-Steg 20 in einem sich mit seinem längeren Durchmesser D in Profillängsrichtung x erstreckenden Langloch 32 und überlagert hierbei den Übergangsbereich an der Aussenseite des Federkörper-Steges 20 mit ihrem Schraubenkopf 33. Das vordere freie Ende 34 des mit Gewinde versehenen Schafts der Schraube 29 durchgreift hierbei ein im Steg 24 des laschenartigen Bauteils 21 vorgesehenes Gewindeloch 35.

Der Stossverbinder 10 funktioniert wie folgt:

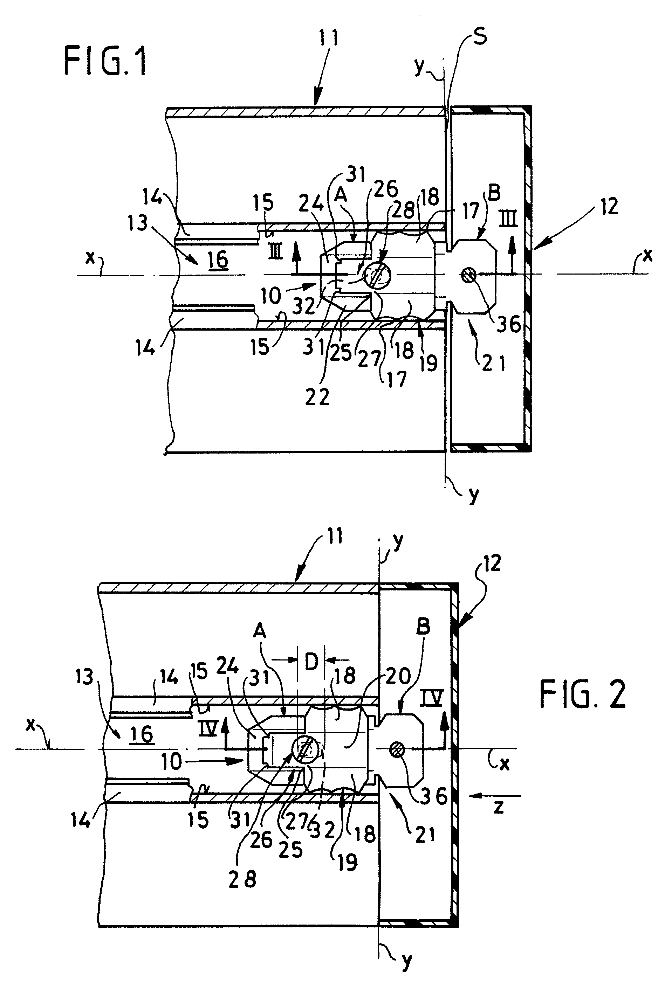

Es sei zunächst vorausgesetzt, dass der Laschenbereich B des laschenartigen Bauteils 21 auf irgendeine Weise, z.B. mittels eines Niets 36, mit der Endkappe 12 verbunden ist. Der Stossverbinder 10 wird nun in axialer Richtung in den Längskanal 13 eingeführt, so dass sich die Anordnung gemäss den Fig. 1, 3 und 5 ergibt. Insbesondere aus Fig. 1 ist zu erkennen, dass zwischen den einander gegenüberliegenden Stirnflächen von Kaschierrohr 11 und Endkappe 12 eine Stosslücke S vorhanden ist.

Sobald die Schraube 33 (vgl. Fig. 3) ein wenig angezogen wird, spreizt das wie ein Verdrängungkörper wirkende laschenartige Bauteil 21 die beiden Spreizschenkel 18 des Federkörpers 19 auseinander, derart, dass sich die spitzen Haltekrallen 17 im Eckbereich zwischen der inneren Rippenwandfläche 15 und der Bodenfläche 16 des Längskanals 13 unverschieblich festbeissen. Wenn nun die Schraube 28 bis zu der in Fig. 4 (vgl. ebenfalls Fig. 2) gezeigten Position zugrunde gezogen wird, erfolgt eine Deformation des Federkörpers 19, mit welcher eine Vergrösserung des stumpfen Winkels β zwischen Federzunge 26 und Steg 20 einhergeht. Diese Winkelvergrösserung wiederum bedeutet eine Streckung der Federzunge 26. Während der Streckung übt die Federzunge 26 mit ihrer in den Kupplungsschlitz 30 eingreifenden Zungenspitze 29 einen Schub auf das laschenartige Bauteil 21 in Richtung Z aus. Dieses hat zur Folge, dass die mit dem laschenartigen Bauteil 21 durch den Niet 36 zugfest verbundene Endkappe 12 unter Schliessen der Stosslücke S gegen die benachbarte Stirnfläche des Kaschierrohres 11 gezogen wird. Die Möglichkeit der Relativverschiebung des laschenartigen Bauteils 21 bezüglich des «festgebissenen» Federkörpers 19 ist zum einen durch das Langloch 32 und zum anderen durch die Gleitverbindung zwischen den Gleitschenkeln 22 und den Innenflächen 23 der Spreizschenkel 18 gegeben.

Insbesondere anhand der Fig. 1 und 2 ist auch vorstellbar, dass ein Stossverbinder in Abwandlung des Stossverbinders 10 spiegelsymmetrisch zu einer durch die Gerade y gehenden Symmetrieebene ausgebildet sein kann. Diese derart, dass zwei voneinander unabhängig verspannbare Federkörper 19 vorhanden sind, deren Federzungen 26 voneinander wegweisen. Mit einem derart spiegelsymmetrisch ausgebildeten Stossverbinder wäre man ohne Herstellung irgendwelcher profilseitiger Schraubverbindungslöcher in der Lage, zwei Kaschierrohre 11 im wesentlichen fugenlos miteinander zu verbinden.

Bei Vergleich der Fig. 3 und 4 miteinander wird deutlich, dass das laschenartige Bauteil 21 nach Verspannung des Verbinders 10 unter Schliessung der Stosslücke S um den Betrag v in Richtung Z nach links verschoben wurde.

## Patentansprüche

1. Innenliegender Stossverbinder zur Kupplung von zwei in Längsrichtung aufeinanderfolgenden hohlprofilartigen Bauteilen (11, 12), insbesondere von Stromentnahmeschienen, längsgeschlitzten Kaschierrohren für Stromentnahmeschienen od. dgl., mit einem der Stossüberbrückung dienenden, sich quer zum Stoss (5) und in Profillängsrichtung erstreckenden laschenartigen Bauteil (21), welches zwei Laschenbereiche (A, B) bildet, von denen jeder mit einem der beiden profilseitigen Stossbereiche mindestens mittelbar schraubverbindbar ist, dadurch gekennzeichnet, dass mindestens ein Laschenbereich (A) des laschenartigen Bauteils (21) einen im wesentlichen starren Verdrängungskörper bildet, welcher innerhalb eines trogartigen Federkörpers (19), der zwei Spreizschenkel (18) und einen diese miteinander verbindenden Steg (20) aufweist, im Parallelabstand vom Federkörper-Steg (20) an den Spreizschenkel-Innenflächen (23) in Profillängsrichtung (x) gleit- und begrenzt relativverschiebbar anliegt, wobei von einer dem anderen Laschenbereich (B) abgewandten Stirnseite (25) des Federkörper-Steges (20) eine mit diesem einen stumpfen Winkel (β) einschliessende Federzunge (26) zum laschenartigen Bauteil (21) hin vorragt, deren Zungenwurzel (27) im Übergangsbereich zum Federkörper-Steg (20) mittels einer Schraube (28) an das laschenartige Bauteil (21) annäherbar und deren Zungenspitze (29) mit dem laschenartigen Bauteil (21) bewegungsgekuppelt ist, und wobei die Spreizschenkel (18) an ihren freien Enden mit an der Hohlprofil-Innenfläche (15, 16) abstützbaren Haltekrallen (17) versehen sind.

2. Stossverbinder nach Anspruch 1, dadurch gekennzeichnet, dass die Spreizschenkel (18) unter einem spitzen Winkel (α), insbesondere von etwa 45° bis 70°, vorzugsweise unter einem Winkel (α) von 60°, divergieren.

3. Stossverbinder nach Anspruch 1 oder nach Anspruch 2, dadurch gekennzeichnet, dass die Schraube (28) den Übergangsbereich von der Zungenwurzel (27) zum Federkörper-Steg (20) in einem sich mit seinem längeren Durchmesser (D) in Profillängsrichtung (x) erstreckenden Langloch (32) durchsetzt, den Übergangsbereich (bei 27) stegaussenseitig mit ihrem Schraubenkopf (33) überlagert und mit ihrem freien Gewindeende (34) in einem Gewindeloch (35) des laschenartigen Bauteils (21) aufgenommen ist.

4. Stossverbinder nach Anspruch 1 bis 3, dadurch gekennzeichnet, dass die Zungenspitze (29) abgewinkelt und in einem im laschenartigen Bauteil (21) vorgesehenen, quer zur Profillängsrichtung (x) verlaufenden Kupplungsschlitz (30) aufgenommen ist.

5. Stossverbinder nach Anspruch 4, dadurch gekennzeichnet, dass die Federzunge (26) beiderseits im Abstand von der Zungenspitze (29) sich benachbart ausserhalb des Kupplungsschlitzes (30) auf dem laschenartigen Bauteil (21) abstützende Anlageflächen (31) bildet.

6. Stossverbinder nach Anspruch 1 bis 5, dadurch gekennzeichnet, dass das laschenartige Bauteil (21) etwa in Anpassung an die Querschnittsform des Federkörpers (19) ebenfalls im wesentlichen trogartig ausgebildet ist und mit zwei zueinander divergierenden Gleitschenkeln (22) an den Spreizschenkel-Innenflächen (23) anliegt.

7. Stossverbinder nach Anspruch 1 bis 6, gekennzeichnet durch eine bezüglich einer durch den Stoss (bei y) verlaufenden Symmetrieebene spiegelsymmetrische Ausbildung.

## Claims

1. Internally disposed butt jointing device for connecting two structural parts (11, 12) of the hollow section type which are arranged one after the other in the longitudinal direction, in particular conductor rails, longitudinally slotted casing tubes for conductor rails, etc., comprising a strap-like structural part (27) which serves to bridge the joint, extends at a right angle to the joint (5) and in the longitudinal direction of the sections and forms two strap areas (A, B), each of which can be at least indirectly screwed to one of the two joint areas at the section side, characterised in that at least one strap area (A) of the strap-like structural part (21) forms an essentially rigid displacement body which, within a trough-like spring body (19) comprising two splayed legs (18) and a crosspiece (20) connecting the latter, rests at a parallel distance from the spring body crosspiece (20) against the internal surfaces (23) of the splayed legs in the longitudinal direction (x) of the sections in such a way that it can slide and is relatively displaceable to a limited degree, a spring tongue (26), which forms an obtuse angle (β) with the spring body crosspiece (20), projecting from one face (25), distant from the other strap area (B), of the spring body crosspiece (20) towards the strap-like structural part (21), the tongue heel (27) of which can be moved closer to the strap-like structural part (21) in the area of transition to the spring body crosspiece (20) by means of a screw (28), while the tongue tip (29) of which is connected for movement to the strap-like structural part (21), and the free ends of the splayed legs (18) being provided with retaining claws (17) which can be supported at the internal surface (15, 16) of the hollow sections.

2. Butt jointing device according to claim 1, characterised in that the splayed legs (18) diverge at an acute angle (α), especially an angle of between 45° and 70°, and preferably an angle (α) of 60°.

3. Butt jointing device according to claim 1 or claim 2, characterised in that the screw (28) penetrates the area of transition from the tongue root (27) to the spring body crosspiece (20) in a slot (32), the longer diameter (D) of which extends in the longitudinal direction (x) of the sections, that its screwhead (33) overlies the area of transition (at 27) on the external side of the crosspiece, and that its free threaded end (34) is inserted in a threaded hole (35) in the strap-like structural part (21).

4. Butt jointing device according to claims 1 to 3, characterised in that the tongue tip (29) is bent and inserted in a connection slot (30) provided in the strap-like structural part (21) and extending at a right angle to the longitudinal direction (x) of the sections.

5. Butt jointing device according to claim 4, characterised in that the spring tongue (26) forms adjacent bearing surfaces (31) on both sides and at a distance from the tongue tip (29) which are supported outside of the connecting slot (30) on the strap-like structural part (21).

6. Butt jointing device according to claims 1 to 5, characterised in that, in order to approximately match the cross-sectional shape of the spring body (19), the strap-like structural part (21) also has an essentially trough-like shape and bears on the internal surfaces (23) of the splayed legs with two slide legs (22) which diverge from one another.

7. Butt jointing device according to claims 1 to 6, characterised by a construction which is axially symmetrical with respect to a plane of symmetry extending through the joint (at y).

**Revendications**

1. Elément d'assemblage bout à bout placé intérieurement pour l'accouplement de deux éléments de construction (11, 12) similaires à des profilés creux, se suivant en direction longitudinale, en particulier de barres de prélèvement de courant, de tubes de doublage fendus longitudinalement pour barres de prélèvement de courant et analogues, muni d'un élément de construction (21) similaire à une patte servant à franchir le joint (5), s'étendant transversalement au joint et dans la direction longitudinale des profilés, qui forme deux régions de patte (A, B) dont chacune peut être reliée par vissage au moins indirectement à l'une des régions de joint du côté des profilés, caractérisé par le fait qu'au moins une région de patte (A) de l'élément de construction (21) similaire à une patte forme un corps de refoulement pratiquement rigide qui s'applique à l'intérieur d'un corps de ressort (19) similaire à une auge qui présente deux ailes d'écartement (18) et une âme reliant celles-ci entre elles, parallèlement à l'âme (20) du corps de ressort avec espacement, de manière à pouvoir glisser et coulisser relativement de façon limitée sur les surfaces intérieures d'aile d'écartement (23), dans la direction longitudinale (x) du profilé, que d'un côté frontal (25) de l'âme (20) du corps de ressort, éloigné de l'autre région de patte (8), une lame de ressort (26) faisant avec l'âme un angle obtu béta se dresse, en direction de l'élément (21) similaire à une patte, lame dont la racine (27) peut, dans la région de transition vers l'âme (20) du corps de ressort, être approchée de l'élément de construction (21) similaire à une patte au moyen d'une vis (28) et dont la pointe (29) est accouplée, quant au mouvement, à l'élément de construction (21) similaire à une patte, les ailes d'écartement (18) étant munies à leurs extrémités libres de crampons de retenue (17) pouvant s'appuyer sur la surface intérieure (15, 16) du profilé.

2. Elément d'assemblage bout à bout selon la revendication 1, caractérisé par le fait que les ailes d'écartement (18) divergent sous un angle aigu alpha, en particulier d'environ 45 à 70°, de préférence sous un angle alpha de 60°.

3. Elément d'assemblage bout à bout selon la revendication 1 ou 2, caractérisé par le fait que la vis (28) traverse la région de transition de la racine (27) de la lame à l'âme (20) du corps de ressort dans un trou oblong (32) s'étendant par son plus grand diamètre (D) dans la direction longitudinale (x) du profilé, surplombe par sa tête de vis (33) la région de transition (27) du côté extérieur de l'âme et se loge par son extrémité filetée (54) libre dans un trou taraudé de l'élément de construction (21) similaire à une patte.

4. Elément d'assemblage bout à bout selon les revendications 1 à 3, caractérisé par le fait que la pointe (29) de la lame est coudée et est logée dans une fente d'accouplement (30) prévue dans l'élément de construction (21) similaire à une patte, dirigée transversalement à la direction longitudinale (x) du profilé.

5. Elément d'assemblage bout à bout selon la revendication 4, caractérisé par le fait que la lame de ressort (26) forme des deux côtés des surfaces d'application (31) s'appuyant au voisinage l'une de l'autre, hors de la fente d'accouplement (30), sur l'élément de construction (21) similaire à une patte.

6. Elément d'assemblage bout à bout selon les revendications 1 à 5, caractérisé par le fait que l'élément de construction (21) similaire à une patte est également constitué pratiquement de façon similaire à une auge, de façon à peu près adaptée à la forme de section du corps de ressort (19) et s'applique, par deux ailes de glissement (22) divergeant l'une par rapport à l'autre, sur les surfaces intérieures (23) des ailes d'écartement.

7. Elément d'assemblage bout à bout selon les revendications 1 à 6, caractérisé par une constitution symétrique autour d'un plan de symétrie passant par le joint (en y).

# FIG.1

# FIG. 2

FIG. 3

FIG. 4

FIG.5